# EUROPEAN PATENT SPECIFICATION

(11) **EP 4 113 342 B1**
(45) Date of publication and mention of the grant of the patent: **09.10.2024**
(21) Application number: 21382579.7
(22) Date of filing: 30.06.2021
(51) Int. Cl.: G06F 21/57, H04L 9/32, H04L 9/40, H04W 12/10, H04L 9/08

(54) **UPDATE AGENT DOWNLOAD SCHEME**
SCHEMA ZUM HERUNTERLADEN EINES AKTUALISIERUNGSMITTELS
SCHÉMA DE TÉLÉCHARGEMENT D'AGENT DE MISE À JOUR

(43) Date of publication of application: 04.01.2023
(73) Proprietor: Giesecke+Devrient Mobile Security Germany GmbH, 81677 München (DE)
(72) Inventor: GIFRE, Clara, 08028 Barcelona (ES); PATINO, David, 08620 Sant Vicenc dels Horts (ES); RUAU, Federico, 08907 Hospitalet de Llobregat (ES)
(74) Representative: LKGLOBAL Lorenz & Kopf Patentanwalt Attorney at Law PartG mbB

(56) References cited:
- EP-A1- 3 208 717
- EP-A1- 3 629 610
- US-A1- 2004 093 597
- US-A1- 2013 185 563
- US-A1- 2018 082 065
- V GSMA ET AL: "GSM Association Non-confidential Official Document SGP.22 -SGP.22 RSP Technical Specification Security Classification: Non-confidential GSM Association Non-confidential Official Document SGP.22 -SGP.22 RSP Technical Specification", 5 June 2020 (2020-06-05), pages 41, XP055748263, Retrieved from the Internet <URL:https://www.gsma.com/esim/wp-content/uploads/2020/06/SGP.22-v2.2.2.pdf> [retrieved on 20201109]

## Description

The present invention relates to updating a piece of software, such as an operating system, on a secure element, and, more particularly, to a method, a data structure, and an update agent for implementing a scheme for downloading an operating system image onto a secure element.

### BACKGROUND OF THE INVENTION

Recently, mobile devices configured to employ electronic subscriber profiles for communicating on mobile networks have emerged. Such mobile devices are typically equipped with smart cards containing electronic/embedded Secure Elements (SE), such as electronic/embedded universal integrated circuit cards (eUICCs), smartSD, or smart microSD, to name a few.

A secure element is a tamper resistant element, TRE, that provides a secure memory and execution environment within a smart card/device in which application code and application data can be securely stored and administered. The secure element ensures that access to the data stored on the card is provided only when authorized.

A secure element designed to be used in telecommunication products, such as mobile devices, is configured to store one or more electronic subscriber profiles, in particular electronic/embedded subscriber identification module (eSIM) profiles, that may allow mobile devices to connect to one or more mobile networks. A subscriber profile (e.g., eSIM profile) may be generated by a mobile network operator (MNO) and may be downloaded to a mobile network device. The subscriber profile may then be installed on the secure element of the mobile device and used for communication over a corresponding mobile network by the mobile device.

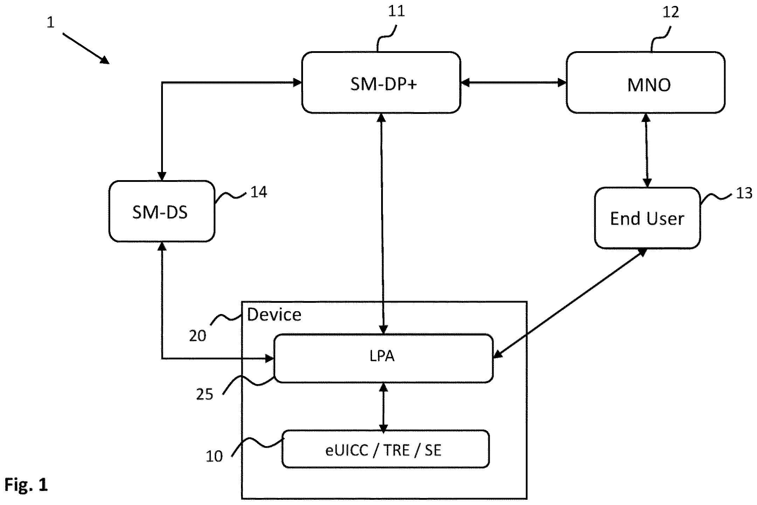

Fig. 1 shows a simplified representation of the architecture of a remote eSIM provisioning system as described in SGP.22 RSP Technical Specification, Version 2.0, issued by the GSM Association (in the following referred to as GSMA RSP 22). The eSIM provisioning system 1 is organized around several elements: the SM-DP+ (Subscription Manager - Data Preparation and Secure Routing, 11), the SM-DS (Subscription Manager - Discovery Server, 14), the LPA (Local Profile Assistance, 25) and the eUICC, 10, the latter being part of a mobile device 20, of an end user 13.

The SM-DP+ 11 is responsible for the creation, download, remote management (enable, disable, update, delete) and the protection of subscriber profiles provided by the MNO 12. In particular, the SM-DP+ 11 may be configured to provide a profile in a Bound Profile Package, and enable the Bound Profile Package to be securely transmitted.

The LPA (Local Profile Assistant, 25) is a set of functions in the device 20 responsible for providing the capability to download (encrypted) profiles to the eUICC/TRE/SE 10. It also presents the local management end user interface to the end user 13 so they can manage the status of profiles on the eUICC/TRE/SE 10. The SM-DS 14 provides means for the SM-DP+ 11 to communicate with the eUICC/TRE/SE 10.

Historically, the native implementation or the operating system of a TRE could not be updated once the TRE was deployed in the field, and hence, did not vary once the TRE has surpassed the production phase. This means that if any problem is found that is related to the software within it (new attacks or vulnerabilities, new updates on sector specification, the expected life cycle of the devices using it), the only possible action is to change the whole TRE. This makes it particularly difficult to keep up to date with the market needs in terms of production (with software updates after production being impossible), especially when the production is bound to be executed within a certified environment in the factory.

The GSMA remote provisioning architecture, depicted in Fig. 1, provides a platform for implementing a procedure to load profiles onto a secure element (SE) or Tamper Resistant Element (TRE), which however allows merely for implementing a change in the data stored in the SE/TRE but not in the basic software present in the SE/TRE. The procedure requires several exchanges between the TRE and the server before it can prepare the Bound Profile Package used for the load, which might not be optimal for a broadcast deploy of a new piece of software. This scheme also lacks extra layers of protection which might be required for the deployment of critical data such as a new operating system.

EP 3 629 610 A1 describes an eUICC profile management method and apparatus. When an operating system of an eUICC needs to be updated, an LPA sets an operating system update flag, and obtains and stores metadata of a first profile. A profile server generates a second profile based on the operating system update flag, generates metadata of the second profile. The LPA configures the metadata of the second profile based on the metadata of the first profile, and activates the second profile based on the configured metadata of the second profile, so that after completing upgrade of the operating system of the eUICC, a user can normally use an operator service without configuring a profile again, thereby simplifying a configuration process of the profile, and improving intention of the user to update the operating system of the eUICC and user experience.

US 2004 / 093 597 A1 describes a firmware update system, comprising a loader module, an update agent, a secure loader manager, an update package reference, a setting service and a memory manager. The system facilitates the download of update packages and subsequent update of firmware/ software in mobile handsets. The secure loader manager may populate the update package reference with the appropriate information and flags, employing the setting service, after the successful download and verification of an update package. An update driver may be employed by the mobile handset to communicate information about a downloaded update package to the update agent for subsequent firmware update.

EP 3 208 717 A1 describes a method of managing an object which is represented by a first instance of a class. The first instance is stored in a secure element comprising an initial operating system. The method comprises a step of updating the initial operating system to generate an updated operating system, a step of creating a metadata uniquely associated with the object, said metadata being permanently stored in the secure element and comprising a value of a parameter of said class which has been used to create said first instance. The method comprises a step of reinstantiating the object by generating an updated instance of the class in the updated operating system by using said value to set said parameter of the class, said updated instance representing the object. The reinstantiating step is automatically triggered by the step of updating the initial operating system.

US 2018 / 082 065 A1 describes a device facilitating countersigning updates for multi-chip devices. The device includes at least one processor configured to receive, from a collocated chip, a data item and a software update, the data item being signed using a private key corresponding to a primary entity associated with the collocated chip and the data item comprising an authentication code generated using a symmetric key corresponding to a secondary entity associated with the software update. At least one processor is further configured to verify the data item using a public key associated with the primary entity. At least one processor is further configured to verify the software update based at least in part on the authentication code and using the symmetric key corresponding to the primary entity. At least one processor is further configured to install the software update when both the data item and the software update are verified, otherwise discard the software update.

V Gsma ET AL: "GSM Association Non-confidential Official Document SGP.22-SGP.22 RSP Technical Specification" describes a data structure for profile packages for eUICCs and the creation of a protected Bound Profile Package from an unprotected Profile Package for delivery to an eUICC by an SM-DP+.

It is therefore desirable to provide a solution for updating an operating system on a secure element, which addresses the above-mentioned drawbacks.

### SUMMARY OF THE INVENTION

The present invention addresses the above object by the subject-matter covered by the independent claims. Preferred embodiments of the invention are defined in the dependent claims.

According to a first aspect of the present invention, there is provided a method for downloading an operating system onto a secure element, the secure element comprising an update agent, which is configured to perform steps as follow. The update agent receives from an external device an installation package for installing an operating system onto the secure element. The update agent requests control of the secure element and loads the operating system received with the installation package into the secure element, after which control of the secure element is transferred to the operating system.

The proposed method provides an efficient and secure solution for loading trusted software, in particular an operating system, onto a secure element once the production of the secure element is finished. By equipping the update agent with the capability to control the secure element, the update agent is for some time in charge of the secure element, which does not have an own files system. This allows for an efficient and secure loading, updating, and replacing of software within the secure element.

According to the present invention, the installation package comprises a header part and a data-carrying part, wherein the header part comprises an initialize secure channel signature, and the data-carrying part comprises a plurality of image segments, wherein a sequence of consecutive image segments comprises a manifest, a manifest signature, and an image of the operating system to be loaded onto the secure element.

According to the present invention, receiving the installation package comprises receiving a first part of the installation package comprising the header and a first sequence of the plurality of image segments, the first sequence carrying the manifest signature and the manifest. The update agent is further configured, after it has received the first part of the installation package, to verify the initialize secure channel signature and the manifest signature comprised in the header, using a first key, in particular an Elliptical Curve Digital Signature, ECDSA, key, stored in the update agent.

This provides the update agent with a control mechanism to ensure both the trustworthiness of the installation package as well as of the transmission channel.

In some embodiments of the present invention, requesting control of the secure element comprises sending by the update agent to the external device a request to perform a system reset.

Preferably, after the system reset an initial operating system contained within the secure element is deleted, and control of the secure element is assumed by the update agent.

In some embodiments of the present invention, loading the operating system comprises receiving after the system reset the complete installation package from the external device, the complete installation package comprising the plurality of image segments, wherein the plurality of image segments carries the manifest, the manifest signature and the image of the operating system, each image segment being protected with a pair of image protection keys. After receiving the installation package, the update agent verifies integrity of the installation package, extracts the operating system from the corresponding image segments, and stores the operating system into a memory of the secure element.

Preferably, the image protection keys are established between the external device and the secure element through a key agreement process and used to implement a protection scheme based on a SCP03t algorithm, to ensure integrity of the installation package.

A confidential communication mechanism can thus be set up between the external device and the update agent.

Preferably, the header further comprises a protected keys field, carrying the image protection keys.

In some embodiments of the present invention, the header of the installation package comprises further a package binding signature for authenticating the software installation package. Preferably, the package binding signature comprises a signature of the initialize secure channel field and/or the protected keys field. The update agent is configured to perform authentication of the software installation package by verifying the package binding signature using a second key, in particular an Elliptical Curve Digital Signature, ECDSA, key, stored in the update agent.

According to a second aspect of the present invention, there is provided a computer-implemented data structure for providing a software installation package, in particular an operating system installation package, to an update agent on a secure element. The data structure comprises a header part and a data-carrying part. The header part comprises an initialize secure channel field carrying information on the installation operation to be implemented and for performing key derivation at the secure element. The data-carrying part comprises a plurality of image segments, wherein a sequence of consecutive image segments comprises a manifest, a manifest signature, and an image of the software to be loaded onto the secure element. Each image segment is protected with a pair of image protection keys.

Preferably, the header part comprises a protected keys field carrying image protection keys, for encrypting the software image.

Preferably, the header part comprises a package binding signature, comprising a signature of the initialize secure channel field and/or the protected keys field, for authenticating the software installation package.

In some embodiments of the present invention, the manifest contains information on the software image to be uploaded, in particular information for authenticating the software image and/or authenticating an issuer of the image. The "software image" refers to a generic data format encapsulating a software version and cryptographic data to be used by the update agent. A software image can be an image of an operating system, but also an image of an applet or other application to be installed onto the secure element.

According to a third aspect of the present invention, there is provided an update agent in a secure element for downloading software, in particular an operating system, onto a secure element. The update agent is configured to receive through a data structure according to the second aspect an installation package for installing an operating system and to perform the method according to the first aspect. In particular, the update agent is configured to verify the installation package and request control of the secure element, load the operating system received with the installation package into the secure element, and transfer control of the secure element to the operating system.

According to the present invention, the update agent is personalized with a plurality of cryptographic keys, selected from a set comprising at least a first key, for verifying the manifest signature and the initialize secure channel signature received with the installation package, a key pair, for key agreement for processing image segments of the installation package, a second key, for verifying the package binding signature. Preferably, the first key is an Elliptical Curve Digital Signature, ECDSA, key. Preferably, the second key is an Elliptical Curve Digital Signature, ECDSA, key. Preferably, the key pair for key agreement is an Elliptical Curve Key Agreement, ECKA, key pair. The update agent is configured to carry out the method for downloading an operating system onto the secure element according to any one of the embodiments described herein.

The aspects and embodiments described herein provide an efficient and secure solution for updating software, in particular an operating system, in a secure element, and thus to keep the secure element up to date with the evolution of the market, as well as to provide patches and security and bug fixes at any point in the life cycle of the secure element.

It has to be noted that all the devices, elements, units and means described in the present application could be implemented in software or hardware elements or combination thereof. All steps which are performed by the various entities described in the present application as well as the described functionalities are intended to mean that the respective entity is adapted to or configured to perform the respective steps and functionalities.

Further aspects, features and advantages of the present invention will become apparent to those of ordinary skills in the art upon reviewing the following detailed description of preferred embodiments and variants of the present invention in conjunction with the accompanying figures.

### BRIEF DESCRIPTION OF THE DRAWINGS

Reference will now be made to the accompanying figures, in which
- FIG. 1: shows a simplified representation of the architecture of a GSMA remote provisioning system;
- FIG. 2: shows an architecture of a remote eSIM provisioning system according to an embodiment of the invention;
- FIG. 3: shows a flow chart of a method for downloading an operating system onto a secure element according to an embodiment;
- FIGs. 4 to 7: show further steps of the method of Fig. 3 according to preferred embodiments;
- FIG. 8: shows a sequence diagram for implementing the method for downloading an operating system on the system architecture of Fig. 2 according to an embodiment; and
- FIG. 9: shows a security scheme for performing software/OS update according to an embodiment.

### DETAILED DESCRIPTION

Detailed explanations of the present invention are given below with reference to attached drawings that illustrate specific embodiment examples of the present invention. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the scope of the present invention. In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

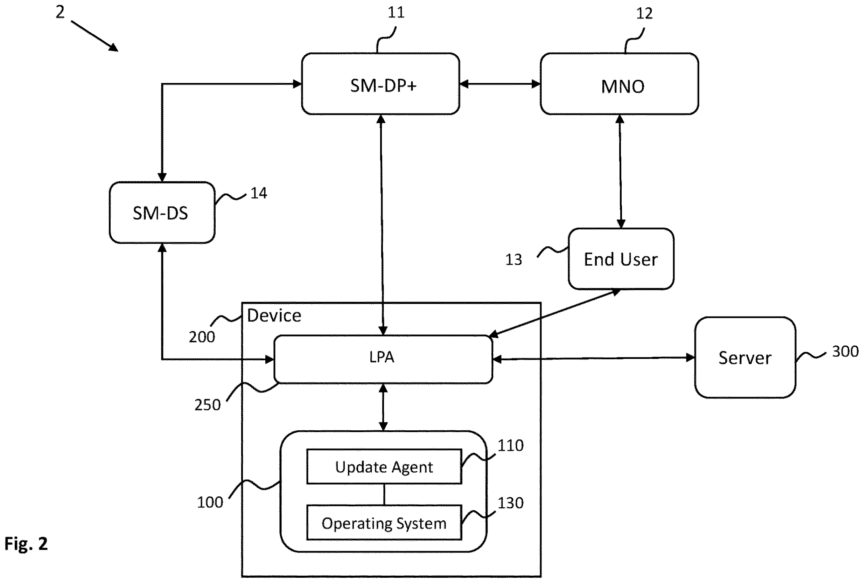

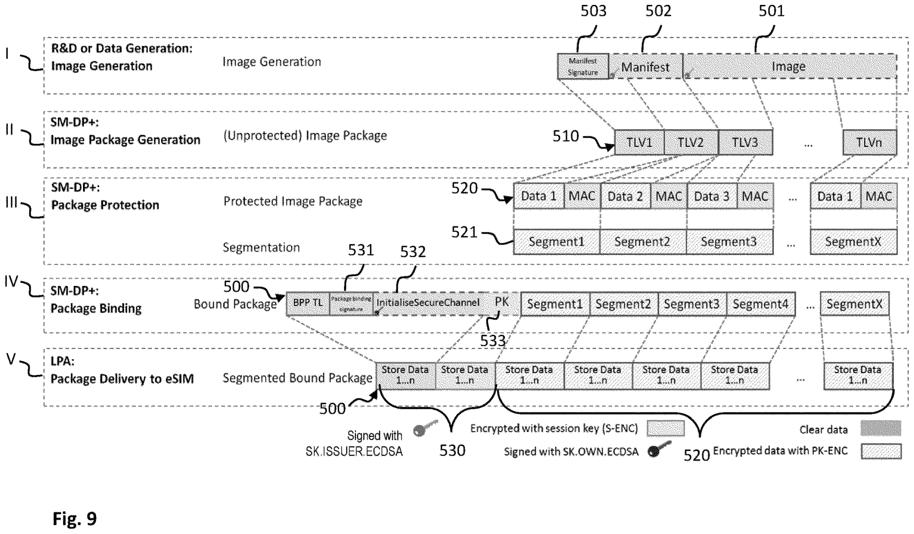

Fig. 9 shows a software update security scheme to provide a software image (e.g., OS image) for the update according to an embodiment. The scheme to provide the software image for the update adapts the general scheme known from GSMA RSP 22 to the architecture of Figure 2.

The diagram in Fig. 9 illustrates the various formats a profile package (i.e., a Bound Installation Profile) will take from its generation to being downloaded onto the secure element via the update agent. In particular, the Bound Installation Profile is created in several stages I to V beginning with the software image by performing several operations such as prepending and segmentation.

In the first stage I, the image 501, provided by an image issuer, is prepended with a manifest 502 and a manifest signature 501. The manifest 502 contains information pertaining to the new software image to be uploaded and ensures the image is acceptable and the issuer is trusted. The resulted block contains clear data that is not encrypted yet.

In stage II, the SM-DP+ 11 may generate, from the package obtained in stage I, an unprotected image package containing a sequence of profile element TLVs (Tag Length Values) TLV1, ..., TLVn, 510. Preferably, the structure of the TLVs is in accordance with the SIMalliance eUICC Profile Package: Interoperable Format Technical Specification V2.0.

In stage III, the SM-DP+ 11 may generate from the unprotected package profile, a protected package profile, by applying TLV encryption and MACing. These operations may preferably follow the scheme described in GSMA "Remote Provisioning of Embedded UICC Technical specification" V3.1. Preferably, TLV encryption is done by applying a private profile protection key PK-ENC, generated by the SM-DP+ 11. The resulting data block is split into segments 1 to X, 521.

In stage IV the SM-DP+ 11 may generate a Bound Installation Profile package 500, by linking or binding the protected image package obtained in stage III to a particular eSIM/eUICC. This is done via a key agreement between the eSIM and the SM-DP+.

Finally, in stage V the Bound Installation Profile package 500, with header part 530 and data-carrying part 520, is segmented into blocks, and delivered to the update agent 110 on the eSIM or secure element 100. Preferably, the segments are sent via STORE DATA commands.

The above described process can be aimed to a set of targets (Broadcast) or to a specific target (Unicast), the only difference being the keys used for the process and the Remote Operation ID used in key derivation.

Table 1 shows the structure of a Bound Installation Package, obtained by the scheme of Fig. 9 described above. The table comprises TLV entries comprising a tag (T), a length (L), and a value field (Value Description).

**TABLE 1. Structure of the Bound Installation Package**

| T | L | Value Description | | | | | | MOC |
|---|---|---|---|---|---|---|---|---|
| 'BF36' | Var. | BP. All the data should not be at the same level than 'BF23'. It should be inside this TL. | | | | | | |
| | | T | L | Value Description | | | | MOC |
| | | 'BF51' | Var. | Package Binding signature | | | | O |
| | | 'BF23' | Var | InitialiseSecureChannel | | | | M |
| | | 'A2' | Var. | secondSequenceOf87 SHALL be absent if no content | | | | C |
| | | | | T | L | | Value Description | MOC |
| | | | | '87' | Var. | | SCP03t segment containing the Image Protection Keys, protected with session keys resulting from the key agreement (S-ENC, S-CMAC). (section 2.6.4). See [GSMA RSP]. Content: PK (TLV for "ES8+.ReplaceSes-sionKeys") | O |
| | | 'A3' | Var. | sequenceOf86 | | | | M |
| | | | | T | L | | Value Description | MOC |
| | | | | '86' | Var. | SCP03t payload | segment b1 protected with Protection keys (PK-ENC, PK-MAC) or with session keys resulting from the key agreement (S-ENC, S-CMAC). (section 2.6.4). See [GSMA RSP]. | M |
| | | | | '86' | Var. | | segment b2 | O |
| | | | | '86' | Var. | | ... | O |
| | | | | '86' | Var. | | segment bn | O |

The entries in the table comprise:

### a) Bound Package Signature (Fig. 9, Package Binding Signature 531)

This part, with Tag or Data Group Identifier DGI 'BF51' is optional. It consists of a signature of the Initialize Secure Channel and the Protection Keys (if present) TLVs. Signed using the update agent's secrete key,SK.ISSUER.ECDSA and verified by its pair, a public key PK. Allow for the protection of the authentication part of the package.

### b) Initialize Secure Channel (Fig. 9, 532)

This part, with Tag or Data Group Identifier DGI BF23 defines a procedure used by the SM-DP+ to open a new Remote SIM Provisioning Session with the target eSIM and contains information for a set of session keys derivation. These keys might be used to secure the Protected Keys or, if these are not present, the sequence of image segments 541.

The procedure is an adaptation of the operation with the same name in [GSMA_RSP] section 5.5.1, with notable differences
(i) SharedInfo for key derivation (as defined in [GSMA_RSP] Annex G) uses the Remote Operation ID (Broadcast or Unicast) instead of the EID;
(ii) Transaction ID is stored and used to avoid replay attacks, given that for this scheme the key used for Key Agreement (SK.EUICC.ECKA) is fixed;
(iii) Transaction ID is reset when SK.EUICC.ECKA is updated;
(iv) Signature in tag 5F37 is performed with the update agent's secrete key SK.ISSUER.ECKA and shall be verified with its pair.

The Initialize Secure Channel Procedure is defined by the structure in Table 2.

**TABLE 2. InitializeSecureChannelRequest**

| |
|---|
| ```
               InitialiseSecureChannelRequest ::= [35] SEQUENCE {-- Tag 'BF23'
                  remoteOpld RemoteOpld, -- Remote Operation Type Identifier (value
               SHALL be set to installBoundProfilePackage)
                  transactionld [0] TransactionId, -- The TransactionlD generated by the
               SM-DP+
                  controlRefTemplate[6] IMPLICIT ControlRefTemplate, -- Control Ref-
               erence Template (Key Agreement). Current specification considers a sub-
               set of CRT specified in Global Platform Card Specification v2.2 Amend-
               ment E v1.0.1 as SharedInfo for the Mutual Authentication Data Field
                  smdpPk [APPLICATION 73] OCTET STRING, ---otPK.DP.ECKA in
               Global Platform Card Specification v2.2 Amendment E v1.0.1
               (ePK.AP.ECKA for the mentioned specification), otPK.ISSUER.ECKA for
               this scheme, tag '5F49'
                  smdpSign [APPLICATION 55] OCTET STRING -- SM-DP's signature,
               with SK.ISSUER.ECDSA for this specification, tag '5F37'
               }
               ControlRefTemplate ::= SEQUENCE {
                  keyType[0] Octet1, -- Key type according to GlobalPlatform Card
               Specification [8] Table 11-16, AES= '88' , Tag '80'
                  keyLen[1] Octet1 , --Key length in number of bytes. For current specifi-
               cation key length shall by 0x10 bytes, Tag '81'
``` |
| ```
                  hostld[4] OctetTo16 -- Host ID value , Tag '84' }
               RemoteOpld ::= [2] INTEGER {broadcast(1), unicast(2)} - note that this
               one differs from the definition in [GPC_SPE_042]
               Transactionld ::= OCTET STRING (SIZE(1..16))
``` |

### c) Protected Keys (Fig. 9, 533)

Tag 'A2' contains the Image Protection Keys, which are the keys used to encrypt the software or OS image. If not present, the Image Protection Keys are equal to the derived session key set in the Initialize Secure Channel. If present, the Session Keys Template is a SCP03t secured (using the session key for encryption derived from the key agreement in Initialize Secure Channel) tag 87 TLV with the structure depicted in Table 3.

**TABLE 3. ReplaceSessionKeysRequest**

| |
|---|
| ```
               ReplaceSessionKeysRequest ::= [38] SEQUENCE { -- tag 'BF26'
               -- The new initial MAC chaining value
                  initialMacChainingValue OCTET STRING,
               -- New session key value for encryption/decryption (PK-ENC)
                  ppkEnc OCTET STRING,
               -- New session key value of the session key C-MAC computation/verifica-
               tion (PK-MAC)
               ppkCmac OCTET STRING }
``` |

### d) Sequence of Image Segments (Fig. 9, 521)

Tag 'A3' contains the Manifest Signature 503, the Manifest 502, and the image 501 to be loaded divided in several segments. Each segment 521 comprises a TLV with tag 86 and is protected using SCP03t as defined in GSMA RSP 22, using either the session keys derived in the key agreement

or the Image Protection Keys if present in the Bound Package. The content secured in a segment is an Unprotected Package, comprising the entries depicted in Table 4.

**TABLE 4. Structure of an Unprotected Package (Stage II)**

| | | |
|---|---|---|
| T | 'A4' | |
| L | Length of the TLV in BER-TLV format | |
| V | Address | 4 bytes (little endian) |
| | Size | 4 bytes. Size of the content of the record (little endian) |
| | Content or pattern | |

If the length of the content is not consistent with the provided size, the record is a pattern record, where the content must be written as many times as necessary until the specified size is met. The first segment/s shall contain the manifest 502. The manifest 502 ensures the image is acceptable and the issuer is trusted.

The update agent 110 may receive an installation packages with the above-described structure, extract the operating system from the data-carrying part and download the operating system onto the secure element.

For being able to process an installation package with the above-described structure, the update agent may be personalized with a plurality of cryptographic keys. Examples of such keys may be:
- a first key, for verifying the manifest signature and the initialize secure channel signature received with the installation package. The first key may be an Elliptical Curve Digital Signature, ECDSA, key, PK.KEY.EC-DSA.
- a key pair, preferably a multicast key pair, for key agreement for processing image segments of the installation package. This key pair may be an Elliptical Curve Key Agreement, ECKA, key pair, SK_MC.EUICC.ECKA.
- a second key, for verifying the package binding signature. Preferably, the second key is an Elliptical Curve Digital Signature, ECDSA, key, PK.OWN.ECDSA.

The external entity 200 providing the installation package may dispose of the respective corresponding keys:
- otSK.ISSUER.ECKA and otPK.ISSUER.ECKA: this is an one time key pair used to calculate the session key.
- SK.ISSUER.ECDSA: this is a key used for signing the manifest (i.e., generating the manifest signature), the Initialize Secure Channel (i.e., generating the Initialize Secure Channel signature), and the image (i.e., generating the Image Signature).

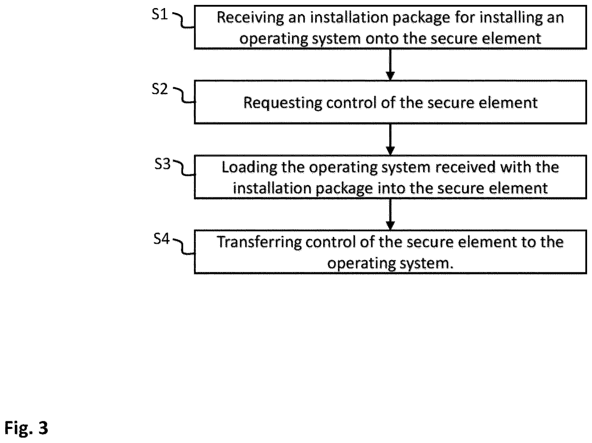

A method for downloading an operating system onto a secure element according to an embodiment will be described in the following with reference to figures 3 to 8.

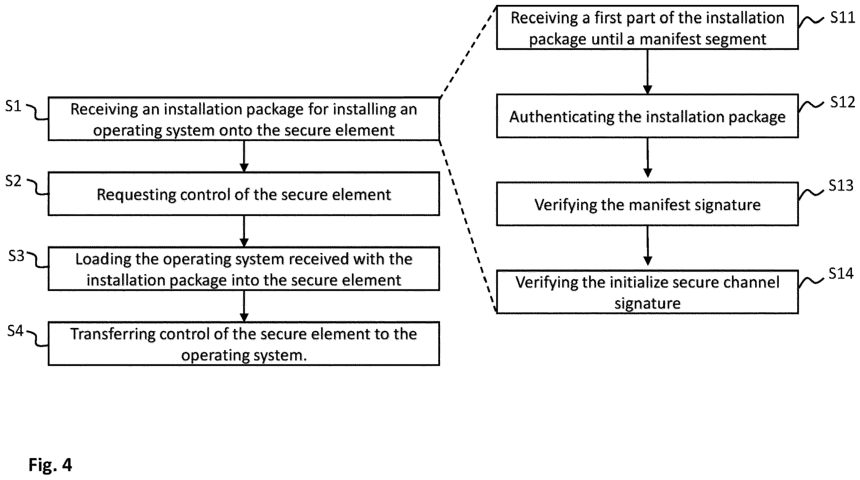

Fig. 3 shows a general flow chart of the method. Figures 4 to 7 show further steps of the method of Fig. 3 according to preferred embodiments.

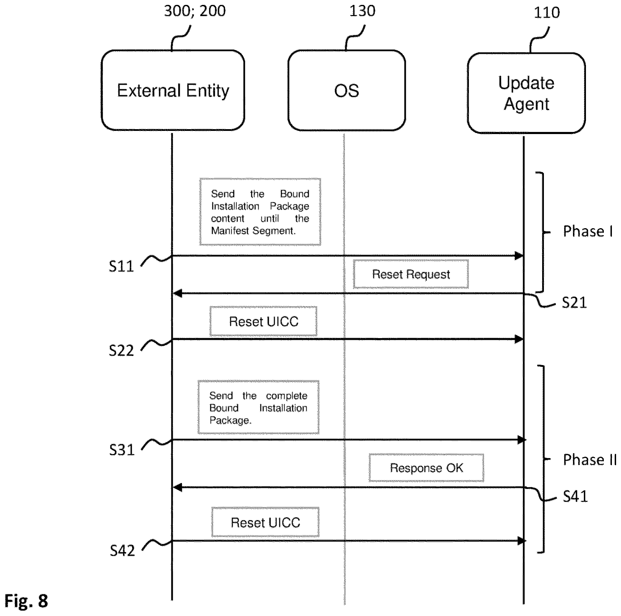

Fig. 8 shows a sequence diagram for implementing the method on the system architecture of Fig. 2 according to an embodiment.

With reference to Fig. 3, an installation package 500 for installing an operating system onto the secure element 100, is received at the update agent 110 in a first step S1. The installation package is sent from an entity external to the secure element, such as an image server 300 or an external device 200. The external device 200 may describe an entity which is in control and communicates with the SE 100. It can be a mobile terminal, or whatever device it is that the SE is mounted on.

The update agent 110 is the entity within the secure element 100 (separated from the OS) in charge of receiving the installation package and performing the software update. The update agent is loaded onto the secure element or TRE together with an (initial) Operative System (OS, 130 in Fig. 2), during the factory production of the secure element 100. Initially, the OS 130 is assumed to be in control, meaning it is the OS which is executed when the TRE 100 boots.

Thus, the update agent, upon receiving the installation package containing the new operating system, requests in step S2 control of the secure element to be transferred from the initial operating system to the update agent 110. Being in control of the secure element, which does not have a file system at all, the update agent may then load in step S3 the new operating system into the secure element. After the new operating system has been loaded in the secure element, the update agent transfers in step S4 the control to the new operating system.

The above-described method may be implemented by the update agent 110 in two phases, as depicted in Fig. 8.

In phase I, the update agent 110 receives in step S11 (which is a sub-step of step S1, c.f., Fig. 4) a first part of the installation package until and including the segment containing the manifest 502. That is, the update agent receives the header part 530 and initials segments of the data-carrying part 520, up to the segment comprising the manifest 502.

In a sub-step S13 (c.f., Fig. 4) of step S1, the update agent verifies the signature 503 of the manifest, to ensure that the image is acceptable and the issuer is trusted. Preferably, the update agent uses a first key stored in the update agent for verifying the manifest. The first key may be an Elliptical Curve Digital Signature, ECDSA, key, stored in the update agent.

The update agent may in addition verify the initialize secure channel signature 532 also by using the first key (step S14 in Fig. 4).

Optionally, the update agent may authenticate the installation package in a step S12, performed after receiving the first part of the installation package, by verifying the package binding signature using a second key, in particular an Elliptical Curve Digital Signature, ECDSA, key, stored in the update agent 110.

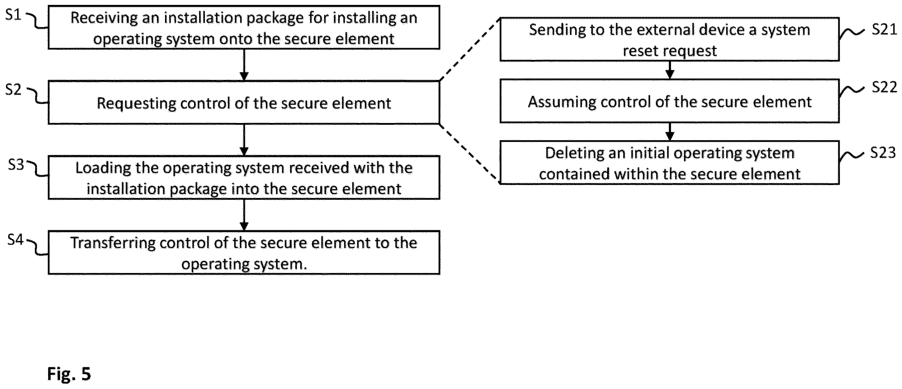

After the signatures have been verified, the update agent requests control of the secure element (step S2 in Fig. 3). This may be implemented by steps S21 to S23 in Fig. 5.

With reference to Fig. 5, the update agent indicates to the external device that a reset is required, to switch control from the initial operating system to the update agent, step S21. A reset is performed in step S22, through which the update agent 110 assumes control of the secure element 100. Upon assuming control of the secure element, the update agent 100 may delete the initial operating system 130.

With above sub-steps S11, S12, S13, S21, S22, S23 phase I in Fig. 8 is completed.

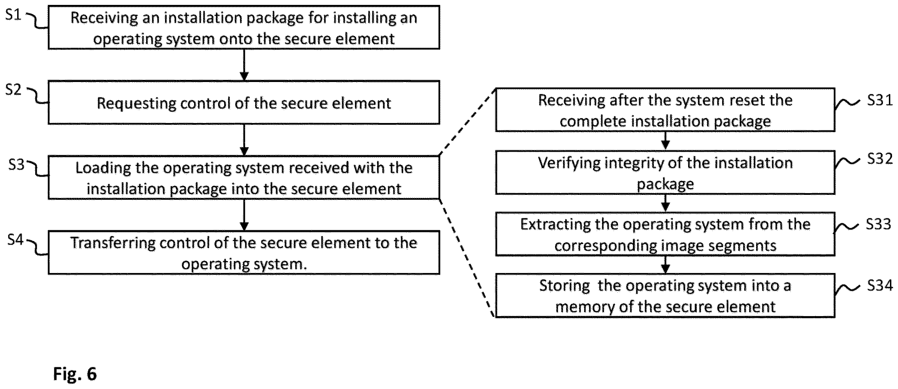

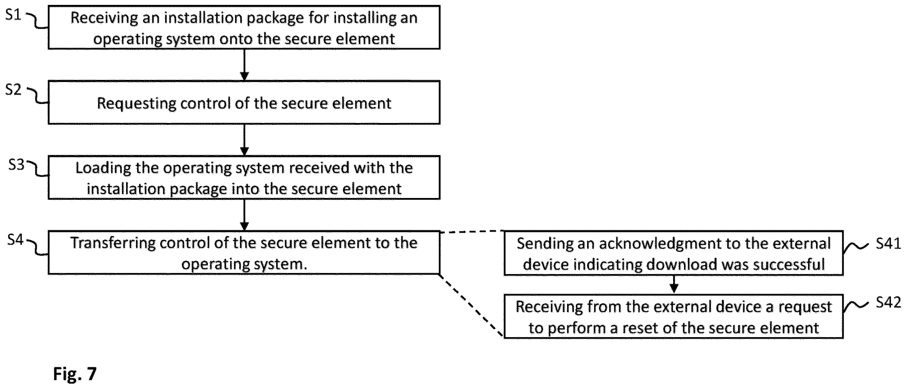

Phase II in Fig. 8 begins after the restart has been performed, and may be implemented as depicted by the steps of Figs. 6 and 7.

In particular, the update agent may receive (S31 in Fig. 6) the installation package again from the external device. This time, however, the complete installation package 500 is received, comprising the plurality of image segments 521, wherein the plurality of image segments carries the manifest 502, the manifest signature 503 and the (new) image 501 of the operating system. Each image segment may be protected with a pair of image protection keys 533.

In step S32, the update agent 110 verifies integrity of the installation package. A set of keys may be used to establish integrity of the installation package. Preferably, the set of keys (e.g., a multicast key pair) is established between the external device 200 and the secure element 100 through a key agreement process and may be used to implement a protection scheme based on a SCP03t algorithm, to ensure integrity of the installation package 500. To be able to process the installation package, the update agent is personalized with this key pair, as will be described later.

After verifying integrity of the installation package, the update agent 110 extracts in step S33 the operating system from the corresponding image segments 501, and stores the (new or updated) operating system into a memory of the secure element in step S34.

After successfully completing the operating system download, the update agent 110 transfers control of the secure element 100 to the operating system, step S4 in Fig. 3. The control transfer may be implemented by the steps S41 to S43 illustrated in Fig. 7.

With reference to Fig. 7, the update agent 110, indicates to the external device that the download was completed, step 41. A reset may be necessary, step S42, for the control of the secure element to be transferred to the newly installed operating system. Phase II in Fig. 8 is therewith completed.

In the above exemplified embodiments of Figs. 4 to 7 for implementing the method for downloading an operating system of Fig. 3, the update agent receives from the external device the installation package segment by segment, wherein in phase I of Fig. 8, the first segments of the installation package are received up to and including the manifest. After the update agent proceeds and accepts the manifest, the system is restarted, and during phase II the update agent receives the complete installation package, and extracts the operating system contained therein.

In an alternative implementation embodiment of the method in Fig. 3, the update agent may receive the complete installation package during phase I, store it in a local memory, and process the installation package segment by segment until and including the segment containing the manifest. In this case, step S11 of Fig. 4 may be slightly different, requesting the update agent to process the installation package until the manifest segment is reached. The remaining steps S12 to S14 may remain unchanged. After the system reset, during which the update agent assumes control of the secure element, there is no need for the external device to send the entire installation package anymore, as the update agent has already received it. Step S31 in Fig. 6 may become obsolete. All the remaining steps and sub-steps illustrated in connection with the first implementation embodiment may be performed in the same way within the alternative implementation.

The aspects and embodiments described herein provide an efficient and secure solution for updating software, in particular an operating system, on a secure element at any time point after production of the secure element, and thus to keep the secure element up to date with the evolution of the market, as well as to provide patches and security and bug fixes at any point in the life cycle of the secure element.

In the foregoing specification, the invention has been described with reference to specific embodiments thereof. It will, however, be evident that various modifications and changes may be made thereto without departing from the broader scope of the invention. For example, the above-described process flows are described with reference to a particular ordering of process actions. However, the ordering of many of the described process actions may be changed without affecting the scope or operation of the invention. The specification and drawings are, accordingly, to be regarded in an illustrative rather than restrictive sense.

## Claims

1. A method for downloading an operating system onto a secure element, the secure element (100) comprising an update agent (110), the method comprising the steps performed by the update agent:
- receiving (S1) from an external device (200; 300) an installation package (500) for installing an operating system onto the secure element (100);
- requesting (S2) control of the secure element (100);
- loading (S3) the operating system received with the installation package into the secure element (100); and
- transferring (S4) control of the secure element (100) to the operating system;
wherein the installation package comprises a header part (530) and a data-carrying part (520), wherein the header part (530) comprises an initialize secure channel signature (532), and the data-carrying part (520) comprises a plurality of image segments (521), wherein a sequence of consecutive image segments comprises a manifest (502), a manifest signature (503), and an image (501) of the operating system to be loaded onto the secure element (100);
wherein receiving (S1) the installation package (500) comprises receiving (S11) a first part of the installation package comprising the header (530) and a first sequence of the plurality of image segments, the first sequence comprising the manifest signature (501) and the manifest (502); and wherein the method further comprises verifying (S12) the installation package by verifying the initialize secure channel signature (532) and the manifest signature (503) using a first key, in particular an Elliptical Curve Digital Signature, ECDSA, key, stored in the update agent (110).

2. The method according to any one of the preceding claims, wherein requesting (S2) control of the secure element (100) comprises sending (S21) to the external device (200; 300) a request to perform a system reset.

3. The method according to claim 2, further comprising assuming (S22) control of the secure element (100) and deleting (S23) an initial operating system contained within the secure element (100) after the system reset.

4. The method according to any one of claims 1 to 3, wherein loading (S3) the operating system comprises:
- receiving (S31) after the system reset the complete installation package (500) from the external device (200; 300), the complete installation package comprising the plurality of image segments (521), wherein the plurality of image segments carries the manifest (502), the manifest signature (503) and the image (501) of the operating system, each image segment being protected with a pair of image protection keys (533);
- verifying (S32) integrity of the installation package;
- extracting (S32) the operating system from the corresponding image segments; and
- storing (S33) the operating system into a memory of the secure element.

5. The method according to claim 4, wherein the image protection keys (533) are established between the external device (200; 300) and the secure element (100) through a key agreement process and used to implement a protection scheme based on a SCP03t algorithm, to ensure integrity of the installation package (500).

6. The method according to claim 4 or 5, wherein the header (530) of the installation package (500) comprises further a package binding signature (531), the method further comprising authenticating the installation package by verifying the package binding signature (531) using a second key, in particular an Elliptical Curve Digital Signature, ECDSA, key, stored in the update agent (110).

7. A computer-implemented data structure for providing a software installation package (500), in particular an operating system installation package, to an update agent (110) on a secure element (100), the data structure comprising:
- a header part (530) comprising an initialize secure channel field (532) carrying information on the installation operation to be implemented and for performing key derivation at the secure element (100); and
- a data-carrying part (520) comprising a plurality of image segments (521), wherein a sequence of consecutive image segments comprises a manifest (502), a manifest signature (503), and an image (501) of the software to be loaded onto the secure element;
wherein each image segment is protected with a pair of image protection keys.

8. The computer-implemented data structure according to claim 7, wherein the header part (530) further comprises a protected keys field (533) carrying image protection keys, for encrypting the software image.

9. The computer-implemented data structure according to claim 7 or 8, wherein the header part (530) further comprises a package binding signature (531), comprising a signature of the initialize secure channel field and/or the protected keys field, for authenticating the software installation package.

10. The computer-implemented data structure according to any one of claims 7 to 9, wherein the manifest contains information on the software image to be uploaded, in particular information for authenticating the software image and/or authenticating an issuer of the image.

11. An update agent (110) in a secure element (110) for downloading software, in particular an operating system, onto the secure element (100), the update agent being configured to:
- receive through a data structure according to any one of claims 7 to 10 an installation package (500) for installing an operating system;
- verify the installation package (500) and request control of the secure element (100);
- load the operating system received with the installation package (500) into the secure element (100); and
- transfer control of the secure element (100) to the operating system; wherein the update agent (110) is personalized with a plurality of cryptographic keys, selected from a set comprising at least:
- a first key, in particular an Elliptical Curve Digital Signature, ECDSA, key, for verifying the manifest signature and the initialize secure channel signature within the installation package;
- a key pair, in particular an Elliptical Curve Key Agreement, ECKA, key pair, for processing image segments of the installation package; and
- a second key, in particular an Elliptical Curve Digital Signature, EC-DSA, key, for verifying the package binding signature;
wherein the update agent (110) is configured to carry out the method of any one of claims 1 to 6.

## Patentansprüche

1. Verfahren zum Herunterladen eines Betriebssystems auf ein sicheres Element, wobei das sichere Element (100) einen Update-Agenten (110) umfasst, wobei das Verfahren die Folgenden, von dem Update-Agenten durchgeführten Schritte umfasst:
- Empfangen (S1) eines Installationspakets (500) von einem externen Gerät (200; 300) zum Installieren eines Betriebssystems auf das sichere Element (100);
- Anfordern (S2) der Kontrolle über das sichere Element (100);
- Laden (S3) des mit dem Installationspaket empfangenen Betriebssystems in das sichere Element (100); und
- Übertragen (S4) der Kontrolle über das sichere Element (100) auf das Betriebssystem;
wobei das Installationspaket einen Header-Teil (530) und einen datentragenden Teil (520) umfasst, wobei der Header-Teil (530) eine Initialisierungs-Secure-Channel-Signatur (532) enthält, und der datentragende Teil (520) eine Vielzahl von Image-Segmenten (521) umfasst, wobei eine Sequenz aufeinanderfolgender Image-Segmente ein Manifest (502), eine Manifestsignatur (503) und ein Image (501) des auf das sichere Element (100) zu ladenden Betriebssystems enthält;
wobei das Empfangen (S1) des Installationspakets (500) das Empfangen (S11) eines ersten Teils des Installationspakets umfasst, der den Header (530) und eine erste Sequenz der Vielzahl von Image-Segmenten enthält, wobei die erste Sequenz die Manifestsignatur (503) und das Manifest (502) umfasst; und
wobei das Verfahren ferner das Überprüfen (S12) des Installationspakets durch das Überprüfen der Initialisierungs-Secure-Channel-Signatur (532) und der Manifestsignatur (503) unter Verwendung eines ersten Schlüssels, insbesondere eines Elliptische-Kurven-Digitale-Signatur-Schlüssels, ECDSA-Schlüssels, der in dem Update-Agenten (110) gespeichert ist, umfasst.

2. Verfahren nach einem der vorhergehenden Ansprüche, wobei das Anfordern (S2) der Kontrolle über das sichere Element (100) das Senden (S21) einer Anforderung an das externe Gerät (200; 300) zur Durchführung eines System-Resets umfasst.

3. Verfahren nach Anspruch 2, ferner umfassend das Übernehmen (S22) der Kontrolle über das sichere Element (100) und das Löschen (S23) eines anfänglichen Betriebssystems, das sich nach dem System-Reset in dem sicheren Element (100) befindet.

4. Verfahren nach einem der Ansprüche 1 bis 3, wobei das Laden (S3) des Betriebssystems umfasst:
- Empfangen (S31) des vollständigen Installationspakets (500) von dem externen Gerät (200; 300) nach dem System-Reset, wobei das vollständige Installationspaket die Vielzahl von Image-Segmenten (521) umfasst, wobei die Vielzahl von Image-Segmenten das Manifest (502), die Manifestsignatur (503) und das Image (501) des Betriebssystems enthält, wobei jedes Image-Segment mit einem Paar von Image-Schützschlüsseln (533) geschützt ist;
- Überprüfen (S32) der Integrität des Installationspakets;
- Extrahieren (S32) des Betriebssystems aus den entsprechenden Image-Segmenten; und
- Speichern (S33) des Betriebssystems in einem Speicher des sicheren Elements.

5. Verfahren nach Anspruch 4, wobei die Image-Schutzschlüssel (533) zwischen dem externen Gerät (200; 300) und dem sicheren Element (100) durch einen Schlüsselaustauschprozess etabliert werden und verwendet werden, um ein Schutzschema basierend auf einem SCP03t-Algorithmus zu implementieren, um die Integrität des Installationspakets (500) zu gewährleisten.

6. Verfahren nach Anspruch 4 oder 5, wobei der Header (530) des Installationspakets (500) ferner eine Paketbindungssignatur (531) umfasst, wobei das Verfahren ferner das Authentifizieren des Installationspakets durch Überprüfen der Paketbindungssignatur (531) unter Verwendung eines zweiten Schlüssels, insbesondere eines Elliptische-Kurven-Digitale-Signatur-Schlüssels, ECDSA-Schlüssels, der in dem Update-Agenten (110) gespeichert ist, umfasst.

7. Computerimplementierte Datenstruktur zum Bereitstellen eines Software-Installationspakets (500), insbesondere eines Betriebssystem-Installationspakets, an einen Update-Agenten (110) auf einem sicheren Element (100), wobei die Datenstruktur umfasst:
- einen Header-Teil (530), der ein Initialisierungs-Secure-Channel-Feld (532) umfasst, das Informationen über den durchzuführenden Installationsvorgang enthält und zur Schlüsselableitung in dem sicheren Element (100) dient; und
- einen datentragenden Teil (520), der eine Vielzahl von Image-Segmenten (521) umfasst, wobei eine Sequenz aufeinanderfolgender Image-Segmente ein Manifest (502), eine Manifestsignatur (503) und ein Image (501) der auf das sichere Element zu ladenden Software enthält;
wobei jedes Image-Segment mit einem Paar von Image-Schutzschlüsseln geschützt ist.

8. Computerimplementierte Datenstruktur nach Anspruch 7, wobei der Header-Teil (530) ferner ein geschütztes Schlüsselfeld (533) umfasst, das Image-Schutzschlüssel zur Verschlüsselung des Software-Images enthält.

9. Computerimplementierte Datenstruktur nach Anspruch 7 oder 8, wobei der Header-Teil (530) ferner eine Paketbindungssignatur (531) umfasst, die eine Signatur des Initialisierungs-Secure-Channel-Felds und/oder des geschützten Schlüsselfelds umfasst, um das Software-Installationspaket zu authentifizieren.

10. Computerimplementierte Datenstruktur nach einem der Ansprüche 7 bis 9, wobei das Manifest Informationen über das hochzuladende Software-Image enthält, insbesondere Informationen zur Authentifizierung des Software-Images und/oder zur Authentifizierung eines Herausgebers des Images.

11. Update-Agent (110) in einem sicheren Element (110) zum Herunterladen von Software, insbesondere eines Betriebssystems, auf das sichere Element (100), wobei der Update-Agent konfiguriert ist:
- ein Installationspaket (500) zum Installieren eines Betriebssystems über eine Datenstruktur gemäß einem der Ansprüche 7 bis 10 zu empfangen;
- das Installationspaket (500) zu verifizieren und die Kontrolle über das sichere Element (100) anzufordern;
- das mit dem Installationspaket (500) empfangene Betriebssystems auf das sichere Element (100) zu laden; und
- die Kontrolle über das sichere Element (100) auf das Betriebssystem zu übertragen;
wobei der Update-Agent (110) mit einer Vielzahl von kryptographischen Schlüsseln personalisiert ist, ausgewählt aus einer Menge, die mindestens umfasst:
- einen ersten Schlüssel, insbesondere einen Elliptische-Kurven-Digitale-Signatur-Schlüssel, ECDSA-Schlüssel, zum Überprüfen der Manifestsignatur und der Initialisierungs-Secure-Channel-Signatur innerhalb des Installationspakets;
- ein Schlüsselpaar, insbesondere ein Elliptische-Kurven-Schlüsselaustausch-Schlüsselpaar, ECKA-Schlüsselpaar, zum Verarbeiten von Image-Segmenten des Installationspakets; und
- einen zweiten Schlüssel, insbesondere einen Elliptische-Kurven-Digitale-Signatur-Schlüssel, ECDSA-Schlüssel, zum Überprüfen der Paketbindungssignatur;
wobei der Update-Agent (110) konfiguriert ist, das Verfahren nach einem der Ansprüche 1 bis 6 durchzuführen.

## Revendications

1. Procédé de téléchargement d'un système d'exploitation sur un élément sécurisé, l'élément sécurisé (100) comprenant un agent de mise à jour (110), le procédé comprenant les étapes suivantes réalisées par l'agent de mise à jour :
- la réception (S1) depuis un dispositif externe (200 ; 300) d'un pack d'installation (500) pour installer un système d'exploitation sur l'élément sécurisé (100) ;
- la demande (S2) du contrôle de l'élément sécurisé (100) ;
- le chargement (S3) du système d'exploitation reçu avec le pack installation dans l'élément sécurisé (100) ; et
- le transfert (S4) du contrôle de l'élément sécurisé (100) au système d'exploitation ;
dans lequel le pack d'installation comprend une partie d'en-tête (530) et une partie porteuse de données (520), dans lequel la partie d'en-tête (530) comprend une signature de canal sécurisé d'initialisation (532), et la partie porteuse de données (520) comprend une pluralité de segments d'image (521), dans lequel une séquence de segments d'image consécutifs comprend un manifeste (502), une signature de manifeste (503) et une image (501) du système d'exploitation à charger sur l'élément sécurisé (100) ;
dans lequel la réception (S1) du pack d'installation (500) comprend la réception (S11) d'une première partie du pack d'installation comprenant l'en-tête (530) et une première séquence de la pluralité de segments d'image, la première séquence comprenant la signature de manifeste (501) et le manifeste (502) ; et dans lequel le procédé comprend en outre la vérification (S12) du pack d'installation par la vérification de la signature de canal sécurisé d'initialisation (532) et de la signature de manifeste (503) l'aide d'une première clé, en particulier d'une clé de signature numérique en courbe elliptique, ECDSA, stockée dans l'agent de mise à jour (110).

2. Procédé selon la revendication précédente, dans lequel la demande (S2) du contrôle de l'élément sécurisé (100) comprend l'envoi (S21) au dispositif externe (200 ; 300) d'une demande de réalisation d'une réinitialisation de système.

3. Procédé selon la revendication 2, comprenant en outre la prise (S22) de contrôle de l'élément sécurisé (100) et la suppression (S23) d'un système d'exploitation initial contenu à l'intérieur de l'élément sécurisé (100) après la réinitialisation de système.

4. Procédé selon l'une quelconque des revendications 1 à 3, dans lequel le chargement (S3) du système d'exploitation comprend :
- la réception (S31), après la réinitialisation de système, du pack d'installation (500) complet depuis le dispositif externe (200; 300), le pack d'installation complet comprenant la pluralité de segments d'image (521), dans lequel la pluralité de segments d'image portent le manifeste (502), la signature de manifeste (503) et l'image (501) du système d'exploitation, chaque segment d'image étant protégé par une paire de clés de protection d'image (533) ;
- la vérification (S32) de l'intégrité du pack d'installation ;
- l'extraction (S32) du système d'exploitation à partir des segments d'image correspondants ; et
- le stockage (S33) du système d'exploitation dans une mémoire de l'élément sécurisé.

5. Procédé selon la revendication 4, dans lequel les clés de protection d'image (533) sont établies entre le dispositif externe (200 ; 300) et l'élément sécurisé (100) par l'intermédiaire d'un processus d'accord de clés et utilisées pour mettre en oeuvre un schéma de protection sur la base d'un algorithme SCP03t, pour assurer l'intégrité du pack d'installation (500).

6. Procédé selon la revendication 4 ou 5, dans lequel l'en-tête (530) du pack d'installation (500) comprend en outre une signature contraignante de pack (531), le procédé comprenant en outre l'authentification du pack d'installation par la vérification de la signature contraignante de pack (531) à l'aide d'une deuxième clé, en particulier d'une clé de signature numérique en courbe elliptique, ECDSA, stockée dans l'agent de mise à jour (110).

7. Structure de données mise en oeuvre par ordinateur pour fournir un pack d'installation de logiciel (500), en particulier un pack d'installation de système d'exploitation, à un agent de mise à jour (110) sur un élément sécurisé (100), la structure de données comprenant :
- une partie d'en-tête (530) comprenant un champ de canal sécurisé d'initialisation (532) portant des informations sur l'opération d'installation à mettre en oeuvre et pour réaliser une déduction de clé au niveau de l'élément sécurisé (100) ; et
- une partie porteuse de données (520) comprenant une pluralité de segments d'image (521), dans laquelle une séquence de segments d'image consécutifs comprend un manifeste (502), une signature de manifeste (503) et une image (501) du logiciel à charger sur l'élément sécurisé ;
dans laquelle chaque segment d'image est protégé par une paire de clés de protection d'image.

8. Structure de données mise en oeuvre par ordinateur selon la revendication 7, dans laquelle la partie d'en-tête (530) comprend en outre un champ de clés de protection (533) portant des clés de protection d'image, pour chiffrer l'image de logiciel.

9. Structure de données mise en oeuvre par ordinateur selon la revendication 7 ou 8, dans laquelle la partie d'en-tête (530) comprend en outre une signature contraignante de pack (531), comprenant une signature du champ de canal sécurisé d'initialisation, et/ou du champ de clés de protection, pour authentifier le pack d'installation de logiciel.

10. Structure de données mise en oeuvre par ordinateur selon l'une quelconque des revendications 7 à 9, dans laquelle le manifeste contient des informations sur l'image de logiciel à charger, en particulier des informations pour authentifier l'image de logiciel et/ou pour authentifier un émetteur de l'image.

11. Agent de mise à jour (110) dans un élément sécurisé (110) pour télécharger un logiciel, en particulier un système d'exploitation, sur l'élément sécurisé (100), l'agent de mise à jour étant configuré pour :
- recevoir, par l'intermédiaire d'une structure de données selon l'une quelconque des revendications 7 à 10, un pack d'installation (500) pour installer un système d'exploitation ;
- vérifier le pack d'installation (500) et demander le contrôle de l'élément sécurisé (100) ;
- charger le système d'exploitation reçu avec le pack d'installation (500) dans l'élément sécurisé (100) ; et
- transférer le contrôle de l'élément sécurisé (100) au système d'exploitation ;
dans lequel l'agent de mise à jour (110) est personnalisé avec une pluralité de clés cryptographiques choisies dans un ensemble comprenant au moins :
- une première clé, en particulier une clé de signature numérique en courbe elliptique, ECDSA, pour vérifier la signature de manifeste et la signature de canal sécurisé d'initialisation à l'intérieur du pack d'installation ;
- une paire de clés, en particulier une paire de clés d'accord de clés en courbe elliptique, ECKA, pour traiter des segments d'image du pack d'installation ; et
- une deuxième clé, en particulier une clé de signature numérique en courbe elliptique, EC-DSA, pour vérifier la signature contraignante de pack ;
dans lequel l'agent de mise à jour (110) est configuré pour réaliser le procédé selon l'une quelconque des revendications 1 à 6.
